# EUROPEAN PATENT SPECIFICATION

(11) **EP 1 584 239 B1**
(45) Date of publication and mention of the grant of the patent: **14.05.2008**
(21) Application number: 05075739.2
(22) Date of filing: 30.03.2005
(51) Int. Cl.: A21D 15/04, A21D 15/02, A21D 15/06, A23L 3/005, A23L 3/375

(54) **Method for treating biscuits by means of radiation heating**
Verfahren zur Behandlung von Keksen durch Strahlungsheizung
Procédé de traitement de bicuits en les chauffant par des radiations

(30) Priority: 08.04.2004 BE 200400183
(43) Date of publication of application: 12.10.2005
(73) Proprietor: Eurodesserts N.V., 3580 Beringen (BE)
(72) Inventor: Nijs, Nathalie, 3680 Maaseik (BE)
(74) Representative: Donné, Eddy

(56) References cited:
- EP-A- 0 582 922
- EP-A- 0 612 479
- EP-A- 0 826 306
- GB-A- 455 364
- US-A- 3 889 009
- US-A- 5 876 772

## Description

The present invention concerns a method for treating biscuits or the like, more particularly in order to be able to store them for a relatively long time.

It is known that desserts on the basis of a dairy product or an equivalent product on the basis of soy or the like and one or several biscuits have a relatively limited shelf life, as traces of mould may possibly be present on or in the biscuits.

In order to prevent the growth of these yeasts or moulds, it is known to sterilize the biscuits or the like in a sugared solution.

A disadvantage of this known method is that the biscuits or the like always contain a lot of sugar, which affects their taste.

Another disadvantage of this known method is that the entire sugared solution must be sterilized, which requires relatively much energy and, consequently, is relatively expensive.

Another known solution to extend the shelf life of the biscuits is by adding preservatives which check or prevent the growth of yeasts and/or moulds, such as for example sorbic acid and benzoic acid.

A disadvantage of this known solution is that the efficiency of the preservatives is not sufficient with just any acidity to prevent or check the growth of yeasts and/or moulds, as a result of which products having such an acidity may decay rapidly. Moreover, many consumers prefer products that are free of preservatives.

Yet another known method for extending the shelf life of the biscuits is by subjecting them to a heat treatment, whereby the biscuits are heated by, for example IRradiation as is described in EP 0.582.922 and US 3.889.009.

After the heat treatment the biscuits may be cooled in a refrigerating unit or by placing them in a cold CO₂-atmosphere as described in GB 455.364.

A disadvantage of the above known method is that the known cooling techniques do not allow for a substantially fast cool down of the biscuits, such that they cannot be provided on an aerated diary product or equivalent quickly.

The present invention aims to provide a solution to one or several of the above-mentioned and other disadvantages.

To this aim, the invention concerns a method for treating biscuits or the like, which method mainly consists of heating the biscuits or the like by means of radiation; of subsequently cooling the biscuits in a germfree or almost germfree chamber; and of packaging the biscuits, whereby the biscuits are brought in contact with CO₂ foam to cool them.

An advantage of the present invention is that the biscuits or the like are treated against yeasts and moulds without adding any additional components to the biscuits, which offers the advantage that the biscuits will preserve their taste.

Another advantage of the present invention is that no additional preservatives must be added to the biscuits or the like and that the shelf life of the biscuits is nevertheless relatively long.

Another advantage is that the biscuits which are treated by a method according to the invention can be provided in a dairy product or equivalent product having a neutral acidity (pH), without the risk of any immediate decay.

Yet another advantage of this cooling technique according to the invention is that the biscuits are cooled fast and can be quickly provided on an aerated dairy product or equivalent product, without the risk that the dairy product or equivalent product will lose its volume under the influence of the heat of the biscuit.

In order to better explain the characteristics of the present invention, the following preferred methods for treating biscuits or the like according to the invention are described as an example only without being limitative in any way, with reference to the accompanying drawings, in which:
figure 1 schematically represents a device which can be applied for a method according to the invention;
figure 2 shows a view according to arrow F2 in figure 1;
figure 3 shows a packaging in which biscuits are packed which have been treated with a method according to the invention;
figure 4 shows a variant of figure 1.

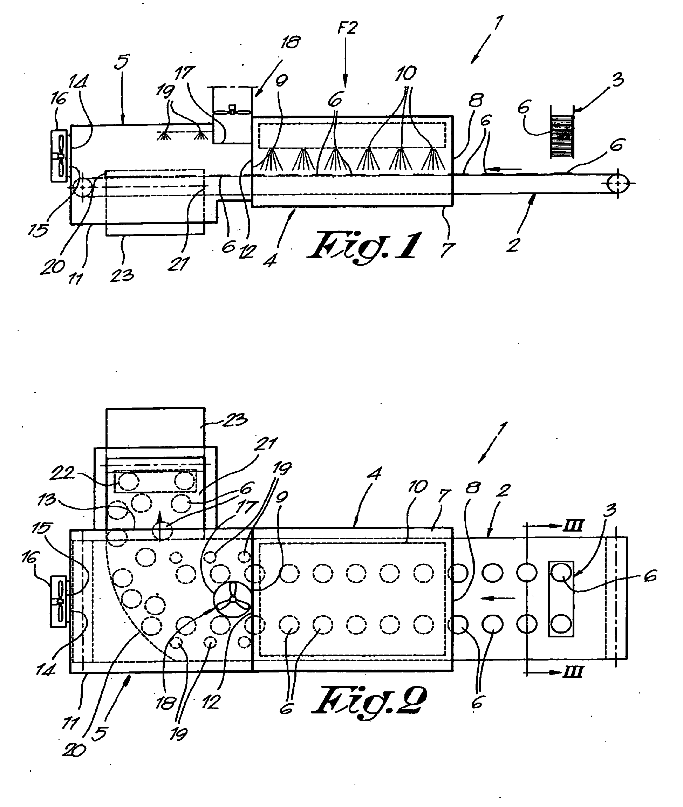

Figures 1 and 2 represent a device 1 which mainly consists of a conveyor belt 2 which is successively guided along a supply element 3 and through an infrared chamber 4 (IR) and a sterile chamber 5.

The supply element 3 can hereby be a buffer, for example, in which biscuits 6 or the like are stacked.

The IR chamber 4 preferably consists of a housing 7 with an inlet 8 and an outlet 9, through which the conveyor belt 2 is guided.

In this chamber 4 are provided IR lamps 10 which are preferably directed towards the conveyor belt 2.

The sterile chamber 5 consists of a housing 11 with an inlet 12 which is hermetically connected to the aforesaid outlet 9 of the IR chamber 4 and an outlet 13.

By sterile is hereby meant that little or no germs of any possibly harmful micro-organisms are present in the chamber 5. In other words, the chamber 5 may be regarded as being germfree or practically germfree.

The housing 11 of the sterile chamber 5 is preferably provided with an opening 14 in which opens a guide 15 of a schematically represented sterile laminar air stream installation 16. Another opening 17 in the housing 11 of the sterile chamber 5 is connected to an exhaust installation 18, via which air can be removed from the sterile chamber 5.

In the sterile chamber 5, near the inlet 12, are preferably provided sprinkler heads 19 which are directed towards the top side of the conveyor belt 2.

Near the outlet 13 of the sterile chamber 5 is in this case provided a guide 20 which is provided slantingly on the conveyor belt 2 and which protrudes further over the conveyor belt 2 on the side of the sterile chamber 5, opposite to the outlet 13 of this chamber 5, than on the side of the outlet 13 itself.

On the outlet 13 of the sterile chamber 5 is in this case provided a second conveyor belt 21 which works in conjunction with a stacking device 22 which is preferably hermetically connected to the outlet 13 of the sterile chamber 5 and which works in conjunction with a filling device 23 for the biscuits 6.

This second conveyor belt 21 is preferably provided with means which are not represented in the figures and which make it possible to disinfect this conveyor belt 21, which means, as is known, can be provided at the bottom of the conveyor belt 21.

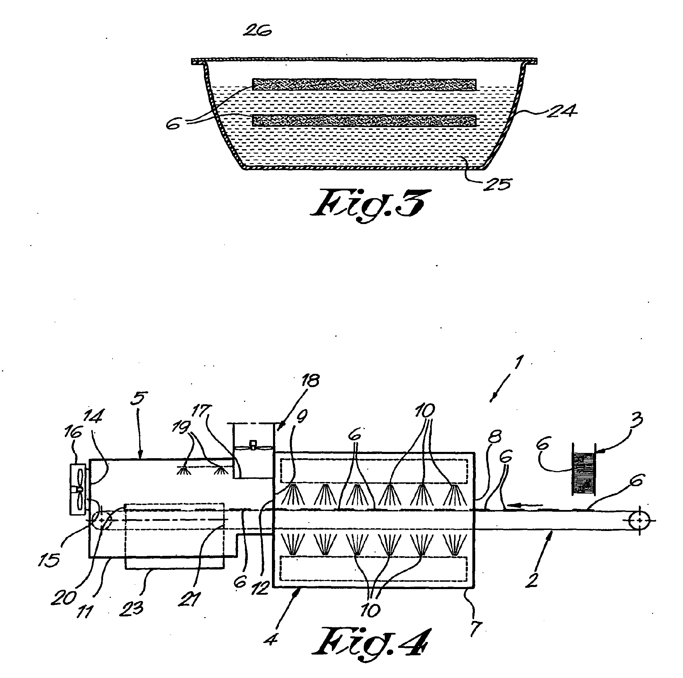

Figure 3 represents a packaging 24 whereby different biscuits 6, preferably as a whole, are provided in or on a dairy product 25 or equivalent product, which packaging 24 is hermetically sealed by means of an aluminium foil 26 or the like.

The method for treating biscuits or the like according to the invention is simple and as follows.

The biscuits 6 to be treated are distributed along the supply element 3 on the conveyor belt 2, after which they are transported through the IR chamber 4 by the conveyor belt 2.

In the IR chamber 4, the biscuits 6 or the like are exposed to IR radiation and to a temperature of, for example, about 175°C, which is maintained by the heat generated by the IR lamps 10.

By setting the speed of the conveyor belt 2 and by adjusting the intensity of the IR lamps 10, it is made sure that the biscuits 6 remain at a certain temperature for a certain while, as a result of which possible moulds and yeasts in or on the biscuits 6 or the like are killed.

Right on the outlet 9 of the IR chamber 4, the biscuits 6 end up in the above-mentioned sterile chamber 5, where they can be either or not cooled by means of CO₂ foam which is distributed over the biscuits 6 or the like by means of for example the sprinkler heads 19.

Said CO₂ foam takes part of the heat from the biscuits 6 and as a result thereof evaporates relatively fast.

In the sterile chamber 5 is preferably created a constant overpressure in order to prevent any possible contamination from the environment, and a laminar airflow is provided, as is customary in sterile installations.

On the outlet 13 of the sterile chamber 5, the biscuits 6 are in this case transferred to the conveyor belt 21 by means of the above-mentioned guide 20, which conveyor belt 21 works in conjunction with the above-mentioned stacking device 22, where the biscuits 6 are stacked so as to finally fill a desired packaging with them in a sterile manner.

Biscuits or the like which are treated according to the above-described method according to the invention are advantageous in that they can be easily provided in or on an either or not aerated dairy product or equivalent product having a neutral or practically neutral pH between 6 and 8, and can subsequently be packed, whereby the whole remains relatively long fit for human consumption, without any preservatives or the like having to be used to this end.

It is clear that the lamps 10 must not necessarily generate an IR radiation; also a radiation with a different wavelength can be applied, such as for example microwaves.

It is also possible to provide different lamps 10 which each emit a radiation with a different wavelength.

Figure 4 represents a variant whereby lamps 10 are provided in the IR chamber 4, above as well as under the conveyor belt 2.

Such an embodiment offers the advantage that the biscuits 6 are irradiated on both sides and reach a desired temperature faster over their entire volume. Thus can be avoided that, with relatively thick biscuits 6, the top side of the biscuits will burn before the bottom side of these biscuits 6 has reached the desired treatment temperature.

It is clear that, in this variant, the conveyor belt 2 must allow the required radiation to pass, to which end this conveyor belt 2 is preferably made of a metal gauze. Such a conveyor belt 2 also offers the advantage that the biscuits 6 can cool down quickly in the sterile chamber 5.

The above-described invention is by no means limited to the above-described embodiments represented in the accompanying drawings; on the contrary, it can be made according to different variants while still remaining within the scope of the invention.

## Claims

1. Method for treating biscuits or the like, consisting of heating the biscuits (6) or the like by means of radiation; of subsequently cooling the biscuits (6) in a germfree or practically germfree environment; and of packaging the biscuits (6), **characterised in that** the biscuits (6) are brought is contact with CO₂- foam to cool them.

2. Method according to claim 1, **characterised in that** the biscuits (6) are irradiated on two sides.

3. Method according to claim 1, **characterised in that** the applied radiation is infrared radiation (IR).

4. Method according to claim 1, **characterised in that** the biscuits (6) are heated by means of IR radiation with IR lamps (10).

5. Method according to claim 1, **characterised in that** biscuits are exposed to a certain intensity of radiation for a certain while.

6. Method according to claim 4, **characterised in that** the heating is done in a chamber (4) with IR lamps (10), and **in that** a temperature of about 175°C prevails in the chamber (4).

7. Method according to claim 1, **characterised in that** in the germfree or practically germfree environment, a pressure prevails which is at least higher than the environmental pressure.

8. Method according to claim 1, **characterised in that** the biscuits (6) or the like are provided in or on a dairy product (25) or an equivalent product on the basis of soy while being packed.

9. Method according to claim 8, **characterised in that** the dairy product (25) or equivalent product is an aerated product.

10. Method according to claim 8, **characterised in that** the dairy product (25) or equivalent product has an acidity between 6 and 8.

## Patentansprüche

1. Verfahren zur Behandlung von Keksen oder dergleichen, bestehend aus dem Erhitzen der Kekse (6) oder dergleichen mittels Strahlung; anschließendem Kühlen der Kekse (6) in einer keimfreien oder praktisch keimfreien Umgebung; und aus dem Verpacken der Kekse (6), **dadurch gekennzeichnet, dass** die Kekse (6) mit CO₂-Schaum in Kontakt gebracht werden, um sie zu kühlen.

2. Verfahren nach Anspruch 1, **dadurch gekennzeichnet, dass** die Kekse (6) an zwei Seiten bestrahlt werden.

3. Verfahren nach Anspruch 1, **dadurch gekennzeichnet, dass** die angewendete Strahlung Infrarotstrahlung (IR) ist.

4. Verfahren nach Anspruch 1, **dadurch gekennzeichnet, dass** die Kekse (6) mittels IR-Strahlung mit IR-Lampen (10) erhitzt werden.

5. Verfahren nach Anspruch 1, **dadurch gekennzeichnet, dass** die Kekse für eine gewisse Zeit einer gewissen Strahlungsintensität ausgesetzt werden.

6. Verfahren nach Anspruch 4, **dadurch gekennzeichnet, dass** das Erhitzen in einer Kammer (4) mit IR-Lampen (10) vorgenommen wird und dass in der Kammer (4) eine Temperatur von etwa 175°C herrscht.

7. Verfahren nach Anspruch 1, **dadurch gekennzeichnet, dass** in der keimfreien oder praktisch keimfreien Umgebung ein Druck herrscht, der mindestens höher als der Umgebungsdruck ist.

8. Verfahren nach Anspruch 1, **dadurch gekennzeichnet, dass** die Kekse (6) oder dergleichen während des Verpackens in oder auf einem Milchprodukt (25) oder einem äquivalenten Produkt auf Sojabasis angebracht werden.

9. Verfahren nach Anspruch 8, **dadurch gekennzeichnet, dass** das Milchprodukt (25) oder äquivalente Produkt ein belüftetes Produkt ist.

10. Verfahren nach Anspruch 8, **dadurch gekennzeichnet, dass** das Milchprodukt (25) oder äquivalente Produkt einen Säuregrad zwischen 6 und 8 hat.

## Revendications

1. Procédé pour traiter des biscuits ou analogues, consistant à chauffer les biscuits (6) ou analogues par exposition à un rayonnement ; à refroidir ensuite les biscuits (6) dans un environnement stérile ou pratiquement stérile ; et à emballer les biscuits (6), les biscuits (6) étant mis en contact avec une mousse de CO₂ pour les refroidir.

2. Procédé selon la revendication 1, **caractérisé en ce que** les biscuits (6) sont exposés à un rayonnement des deux côtés.

3. Procédé selon la revendication 1, **caractérisé en ce que** le rayonnement appliqué est un rayonnement infrarouge (IR)

4. Procédé selon la revendication 1, **caractérisé en ce que** les biscuits (6) sont chauffés par exposition à un rayonnement infrarouge avec des lampes à infrarouge (10).

5. Procédé selon la revendication 1, **caractérisé en ce que** les biscuits sont exposés à une certaine intensité du rayonnement pendant un certain laps de temps.

6. Procédé selon la revendication 4, **caractérisé en ce que** le chauffage est réalisé dans une chambre (4) comprenant des lampes à infrarouge 10, et **en ce que** une température d'environ 175 °C règne dans la chambre (4).

7. Procédé selon la revendication 1, **caractérisé en ce que**, dans l'environnement stérile ou pratiquement stérile, règne une pression qui est au moins supérieure à la pression ambiante.

8. Procédé selon la revendication 1, **caractérisé en ce que** les biscuits (6) sont fournis dans ou sur un produit laitier (25) ou sur un produit équivalent à base de soja, lors de leur emballage.

9. Procédé selon la revendication 8, **caractérisé en ce que** le produit laitier (27) ou un produit équivalent est un produit aéré.

10. Procédé selon la revendication 8, **caractérisé en ce que** le produit laitier (25) ou un produit équivalent possède une acidité entre 6 et 8.
